(19) Europäisches Patentamt
European Patent Office
Office européen des brevets

(11) **EP 3 496 223 B1**

(12) **EUROPEAN PATENT SPECIFICATION**

(45) Date of publication and mention
of the grant of the patent:
**10.11.2021 Bulletin 2021/45**

(21) Application number: **17836649.8**

(22) Date of filing: **29.06.2017**

(51) Int Cl.:
*B60R 16/02* (2006.01)       *H02J 1/00* (2006.01)
*H02G 3/16* (2006.01)        *H05K 9/00* (2006.01)
*B60R 16/023* (2006.01)

(86) International application number:
**PCT/JP2017/023832**

(87) International publication number:
**WO 2018/025542 (08.02.2018 Gazette 2018/06)**

(54) **CONTROL DEVICE**

STEUERUNGSVORRICHTUNG

DISPOSITIF DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2016 JP 2016152378**

(43) Date of publication of application:
**12.06.2019 Bulletin 2019/24**

(73) Proprietor: **Bosch Corporation
Tokyo 150-8360 (JP)**

(72) Inventor: **YAMAZAKI Masashi
Yokohama-shi
Kanagawa 224-8501 (JP)**

(74) Representative: **Bee, Joachim
Robert Bosch GmbH
Zentralabteilung Patente
Postfach 30 02 20
70442 Stuttgart (DE)**

(56) References cited:
**GB-A- 2 300 772          JP-A- 2007 050 012
JP-A- 2008 130 584       JP-A- 2011 096 871
JP-A- 2015 182 711       US-A- 4 668 873
US-A- 5 841 202          US-A- 6 016 084
US-B1- 6 181 571**

**Description**

Technical Field

The present invention relates to a control device that is preferably applied to an engine control unit (ECU) mounted on an automobile, for example.

Background Art

Conventionally, on an automobile, an ECU has been mounted as a control device that executes basic engine control such as ignition timing and fuel injection. In recent years, an ECU that has functions of executing automatic transmission (AT) control and control related to a drive system, a brake system, a steering system, and the like, in addition to the engine control, has been available (for example, see PTL 1).

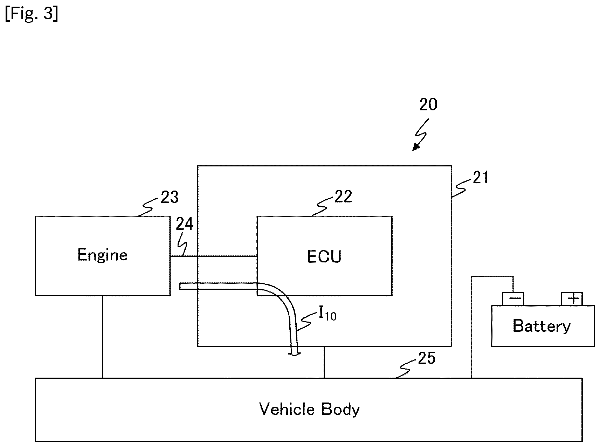

As illustrated in Fig. 3, an ECU 20 of this type is configured that an ECU body section 22 is accommodated in an ECU case 21 formed from a conductive material such as a metal material, and the ECU body section 22 is connected to an engine 23 as a control target via a wire harness 24. In addition, the engine 23 and the ECU case 21 are each connected to a ground via a vehicle body 25.

Here, it has been known that, even when the engine 23 and the ECU case 21 are each electrically connected to the vehicle body 25, an electric potential of the engine 23 and an electric potential of the vehicle body 25 do not always match each other. In the case where the electric potential of the engine 23 is higher than the electric potential of the vehicle body 25, an unexpected current $I_{10}$ possibly flows from the engine 23 into the ECU body section 22 in the ECU 20 via the wire harness 24.

For this reason, in the ECU 20, electrical insulation between the ECU body section 22 and the ECU case 21 is provided, which prevents the unexpected current $I_{10}$ from flowing into the ECU body section 22. Document US6016084A shows a method for connecting a printed circuit board with a conductive part of a housing, for suppressing radiant noise from electronic equipment. It shows in figures 11-13 the use of several LCR circuits.

Citation List

Patent Literature

PTL 1: JP-A-2015-182711

Summary of Invention

Technical Problem

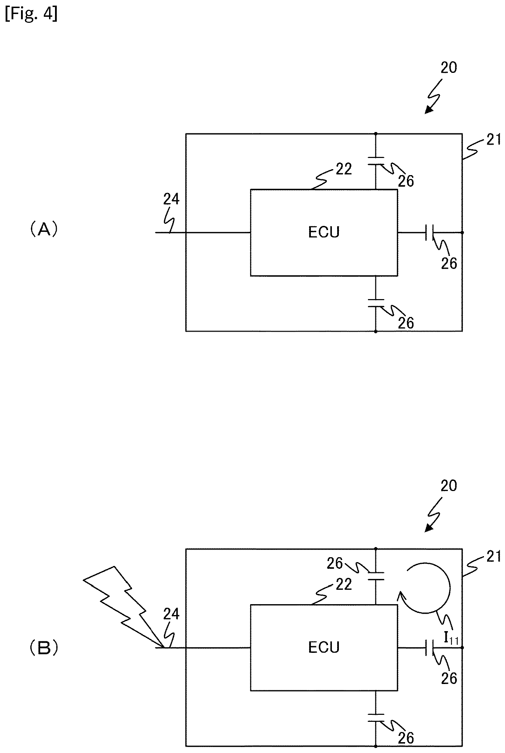

By the way, of the ECUs 20, such an ECU 20 has been available that the ECU body section 22 and the ECU case 21 are electrically connected by coupling capacitors 26 as illustrated in Fig. 4(A), so as to release static electricity that is applied to the ECU body section 22 in an electrostatic test to the ECU case 21, the electrostatic test being conducted to examine resistance of the ECU body section 22 to the static electricity.

As illustrated in Fig. 4(B), the applicant of the present application conducted an electrical stress test, in which noise was injected into the wire harness 24, on the ECU 20 with such a configuration, and it was acknowledged that a loop current $I_{11}$ at a particular frequency was generated in the ECU 20, the loop current $I_{11}$ repeatedly flowing from the ECU body section 22 and flowing back to the ECU body section 22 through the coupling capacitors 26, the ECU case 21, and the coupling capacitors 26. Note that the frequency of such a loop current $I_{11}$ depends on a shape of the ECU 20 and the like. In addition, there is a problem of an erroneous actuation of the ECU body section 22 due to an influence of such a loop current $I_{11}$ in the case where this loop current $I_{11}$ is generated.

The present invention has been made in consideration of the points that have been described so far and therefore proposes a control device capable of realizing high reliability by suppressing occurrence of an erroneous operation.

Solution to Problem

In order to solve such a problem, the present invention provides a control device according to claim 1 in which a control device body section is accommodated in an insulated state in a case formed from a conductive material and in which the control device body section is connected to a control target via a harness as defined by independent claim 1. The control device comprises: plural LCR circuits that electrically connect the control device body section and the case; wherein the plural LCR circuits are arranged in an equally distributed manner in the case such that a loop current $(I_1, I_2)$ generated by a noise flowing into the control device body section via the harness is attenuated by each of the plural LCR circuits, each of a resistance value R of a resistor, self-inductance L of a coil, and capacity C of a capacitor is selected such that a resistance value $(Z_1, Z_2)$ of said entire LCR circuits with respect to a frequency of the loop current $(I_1, I_2)$ becomes maximum, and same resistance value R, self-inductance L, and capacity C are used for each of the plural LCR circuits.

According to the control device of the present invention, even in the case where a loop current is generated due to an inflow of noise into a control device body via the harness, this loop current can be attenuated by the LCR circuits . Thus, it is possible to efficiently prevent occurrence of failure of the control device body section such as an erroneous operation due to an influence of such a loop circuit.

Advantageous Effects of Invention

According to the present invention, the highly reliable control device can be realized.

Brief Description of Drawings

Fig. 1 is a block diagram that illustrates a schematic configuration of an ECU in a first embodiment.
Fig. 2 is a block diagram that illustrates a schematic configuration of an ECU in a second embodiment.
Fig. 3 is a block diagram for illustrating a problem of a conventional ECU.
Figs. 4 (A) and (B) are block diagrams illustrating a loop current.

Description of Embodiments

A detailed description will hereinafter be made on an embodiment of the present invention with reference to the drawings.

(1) First Embodiment

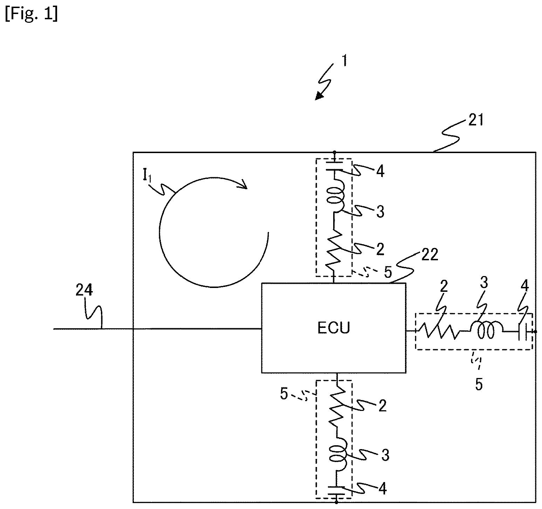

In Fig. 1 in which portions corresponding to those in Fig. 3 are denoted by the same reference signs, the reference sign 1 denotes an entire ECU 1 in a first embodiment. This ECU 1 is a control device that is mounted on an automobile or the like instead of the conventional ECU 20 that has been described above with reference to Fig. 3, and the ECU body section 22 and the ECU case 21 are electrically connected by one or plural LCR series circuits 5. In addition, it is configured that insulation between the ECU body section 22 and the ECU case 21 is provided.

In this case, the LCR series circuit 5 is configured to include a resistor 2, a coil 3, and a capacitor 4 that are connected in series in such an order. In the case where a resistance value of the resistor 2 is set as R[Ω], self-inductance of the coil 3 is set as L[H], and capacity of the capacitor 4 is set as C[F], a resistance value $Z_1$ of this LCR series circuit 5 as an entire circuit can be acquired by the following formula:
[Formula 1]

$$Z_1 = \sqrt{R^2 + \left(\omega L - \frac{1}{\omega C}\right)^2} \qquad \cdots\cdots (1)$$

Accordingly, in this embodiment, each of the resistance value R of the resistor 2, the self-inductance L of the coil 3, and the capacity C of the capacitor 4 is selected such that the resistance value $Z_1$ becomes a maximum value. The resistance value $Z_1$ is acquired from the formula (1) by setting a frequency of the loop current $I_1$, which is generated in the ECU 1 when noise is injected into the wire harness 24, as f and assigning $\omega$ to the formula (1), $\omega$ being defined by the following formula:
[Formula 2]

$$\omega = 2\pi f \qquad \cdots\cdots (2)$$

In this way, in the ECU 1 of this embodiment, even in the case where the loop current $I_1$, which repeatedly flows from the ECU body section 22 and flows back to the ECU body section 22 through the LCR series circuit 5, the ECU case 21, and the LCR series circuit 5 as illustrated in Fig. 1, is generated in the ECU 1 due to the inflow of the noise into the ECU body section 22 via the wire harness 24, this loop current $I_1$ can efficiently be attenuated by the LCR series circuit 5 that works as resistance to said loop current $I_1$.

Note that, in the case of this embodiment, the at least one LCR series circuit 5 is arranged near the wire harness 24 in the ECU case 21. Accordingly, in this ECU 1, the loop current $I_1$, which is generated by the noise flowing into the ECU 1 via the wire harness 24, can promptly be attenuated by the LCR series circuit 5 disposed near the wire harness 24.

Alternatively, in the case of this embodiment, the LCR series circuits 5 are arranged in an equally distributed manner in the ECU case 21. In this way, in this ECU 1, the loop current $I_1$, which is generated in the entire ECU 1, can efficiently be attenuated by each of the LCR series circuits 5.

As it has been described so far, according to the ECU 1 of this embodiment, even when the loop current $I_1$ is generated by the noise flowing thereinto via the wire harness 24, the loop current $I_1$ can promptly be attenuated by the LCR series circuit 5. Therefore, an erroneous operation of the ECU body section 22 and the like can effectively be prevented. In this way, the highly reliable ECU can be realized.

(2) Second Embodiment

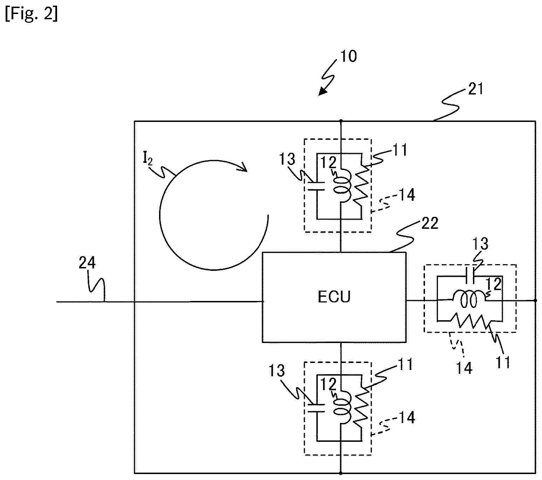

In Fig. 2 in which portions corresponding to those in Fig. 1 are denoted by the same reference signs, the reference sign 10 denotes an entire ECU in a second embodiment. This ECU 10 is configured in a similar manner to the ECU 1 in the first embodiment except for a point that the ECU body section 22 and the ECU case 21 are electrically connected by one or plural LCR parallel circuits 14 instead of the LCR series circuit 5.

In this case, the LCR parallel circuit 14 is configured to include a resistor 11, a coil 12, and a capacitor 13 that are connected in parallel. In the case where the resistance value of the resistor is set as $R[\Omega]$, the self-inductance of the coil is set as $L[H]$, and the capacity of the capacitor is set as $C[F]$, a resistance value $Z_2$ of this LCR parallel circuit 14 as an entire circuit can be acquired by the following formula:

[Formula 3]

$$Z_2 = \frac{1}{\sqrt{\left(\frac{1}{R}\right)^2 + \left(\frac{1}{\omega L} - \omega C\right)^2}} \qquad \cdots\cdots (3)$$

Accordingly, in this embodiment, each of the resistance value R of the resistor 11, the self-inductance L of the coil 12, and the capacity C of the capacitor 13 is selected such that the resistance value $Z_2$ becomes a maximum value. The resistance value $Z_2$ is acquired from the formula (3) by setting a frequency of the loop current $I_2$, which is generated in the ECU 10 when the noise is injected into the wire harness 24, as f and assigning $\omega$, which is defined by the above-described formula (2), to the formula (3).

In this way, in the ECU 10 of this embodiment, similar to the first embodiment, even in the case where the loop current $I_2$, which repeatedly flows from the ECU body section 22 and flows back to the ECU body section 22 through the LCR parallel circuit 14, the ECU case 21, and the LCR parallel circuit 14, is generated in the ECU 10 due to the inflow of the noise via the wire harness 24, this loop current $I_2$ can efficiently be attenuated by the LCR parallel circuit 14 that works as the resistance to said loop current $I_2$.

As it has been described so far, according to the ECU 10 of this embodiment, similar to the first embodiment, even when the loop current $I_2$ is generated by the noise flowing thereinto via the wire harness 24, the loop current $I_2$ can promptly be attenuated by the LCR parallel circuit 14. Therefore, the erroneous operation of the ECU body section 22 and the like can effectively be prevented. In this way, the highly reliable ECU can be realized.

(3) Other Embodiments

Note that the description has been made on the case where the present invention is applied to the ECUs 1, 10 mounted on the automobile or the like in the above-described first and second embodiments; however, the present invention is not limited thereto and can widely be applied to various other control devices.

In addition, in the above-described first and second embodiments, the description has been made on the case where either one type of the LCR circuit of the LCR series circuit 5 and the LCR parallel circuit 14 is applied as the LCR circuit that electrically connects the ECU body section 22 and the ECU case 21; however, the present invention is not limited thereto, and the LCR series circuit 5 and the LCR parallel circuit 14 may be used concurrently as the LCR circuits, each of which electrically connects the ECU body section 22 and the ECU case 21. In this case, in accordance with a shape of or a space inside the ECU case 21, the two circuits 5 and 14 can appropriately be arranged.

Reference Signs List

| | |
|---|---|
| 1, 10: | ECU |
| 2, 11: | Resistor |
| 3, 12: | Coil |
| 4, 13: | Capacitor |
| 5: | LCR series circuit |
| 14: | LCR parallel circuit |
| 21: | ECU case |
| 22: | ECU body section |
| 24: | Wire harness |

**Claims**

1. A control device (1, 10) in which a control device body section (22) is accommodated in an insulated state in a case (21) formed from a conductive material and in which the control device body section (22) is connected to a control target (23) via a harness (24), the control device (1, 10) comprising:

   plural LCR circuits (5, 14) that electrically connect the control device body section (22) and the case (21) ; wherein the plural LCR circuits (5, 14) are arranged in an equally distributed manner in the case (21) such that a loop current ($I_1$, $I_2$) generated by a noise flowing into the control device body section (22) via the harness (24) is attenuated by each of the plural LCR circuits (5, 14),
   each of a resistance value R of a resistor (2, 11), self-inductance L of a coil (3, 12), and capacity C of a capacitor (4, 13) is selected such that a resistance value ($Z_1$, $Z_2$) of said entire LCR circuits (5, 14) with respect to a frequency of the loop current ($I_1$, $I_2$) becomes maximum, and
   same resistance value R, self-inductance L, and capacity C are used for each of the plural LCR circuits (5, 14).

2. The control device according to claim 1, wherein each of the plural LCR circuits (5) is formed by connecting the resistor (2), the coil (3), and the capacitor (4) in series.

3. The control device according to claim 1, wherein
   each of the plural LCR circuits (14) is formed by connecting the resistor (11), the coil (12), and the capacitor (13) in parallel.

**Patentansprüche**

1. Steuereinrichtung (1, 10), in der ein Steuereinrichtungskörperabschnitt (22) in einem isolierten Zustand in einem aus einem leitfähigen Material gebildeten Gehäuse (21) untergebracht ist und in dem der Steuereinrichtungskörperabschnitt (22) über einen Kabelbaum (24) mit einem Steuerziel (23) verbunden ist, wobei die Steuereinrichtung (1, 10) umfasst:

   mehrere LCR-Schaltungen (5, 14), die den Steuereinrichtungskörperabschnitt (22) und das Gehäuse (21) elektrisch verbinden; wobei die mehreren LCR-Schaltungen (5, 14) auf gleichmäßig verteilte Weise in dem Gehäuse (21) angeordnet sind, so dass ein Schleifenstrom ($I_1$, $I_2$), der durch ein Rauschen erzeugt wird, das über den Kabelbaum (24) in den
   Steuereinrichtungskörperabschnitt (22) fließt, durch jede der mehreren LCR-Schaltungen (5, 14) gedämpft wird, jeder eines Widerstandswerts R eines Widerstands (2, 11), einer Eigeninduktanz L einer Spule (3, 12) und einer Kapazität C eines Kondensators (4, 13) wird so gewählt, dass ein Widerstandswert ($Z_1$, $Z_2$) der ganzen LCR-Schaltungen (5, 14) bezüglich einer Frequenz des Schleifenstroms ($I_1$, $I_2$) ein Maximum wird, und
   ein gleicher Widerstandswert R, Eigeninduktanz L und Kapazität C für jede der mehreren LCR-Schaltungen (5, 14) verwendet wird.

**2.** Steuereinrichtung nach Anspruch 1, wobei jede der mehreren LCR-Schaltungen (5) durch Verbinden des Widerstands (2), der Spule (3) und des Kondensators (4) in Reihe gebildet wird.

**3.** Steuereinrichtung nach Anspruch 1, wobei jede der mehreren LCR-Schaltungen (14) durch eine Parallelschaltung des Widerstands (11), der Spule (12) und des Kondensators (13) gebildet wird.


**Revendications**

**1.** Dispositif de commande (1, 10) dans lequel une section de corps de dispositif de commande (22) est logée dans un état isolé dans un boîtier (21) formé à partir d'un matériau conducteur et dans lequel la section de corps de dispositif de commande (22) est reliée à une cible de commande (23) par l'intermédiaire de fils couplés (24), le dispositif de commande (1, 10) comprenant :

plusieurs circuits LCR (5, 14) qui connectent électriquement la section de corps de dispositif de commande (22) et le boîtier (21) ; dans lequel

les plusieurs circuits LCR (5, 14) sont disposés de manière également répartie dans le boîtier (21) de telle sorte qu'un courant de boucle ($I_1$, $I_2$) généré par un bruit circulant dans la section de corps de dispositif de commande (22) par l'intermédiaire des fils couplés (24) soit atténué par chacun des plusieurs circuits LCR (5, 14),

chacune d'une valeur de résistance R d'une résistance (2, 11), d'une auto-inductance L d'une bobine (3, 12) et d'une capacité C d'un condensateur (4, 13) est sélectionnée de telle sorte qu'une valeur de résistance ($Z_1$, $Z_2$) de la totalité desdits circuits LCR (5, 14) par rapport à une fréquence du courant de boucle ($I_1$, $I_2$) devienne maximale, et

les mêmes valeur de résistance R, auto-inductance L et capacité C sont utilisées pour chacun des plusieurs circuits LCR (5, 14).

**2.** Dispositif de commande selon la revendication 1, dans lequel chacun des plusieurs circuits LCR (5) est formé en connectant la résistance (2), la bobine (3), et le condensateur (4) en série.

**3.** Dispositif de commande selon la revendication 1, dans lequel
chacun des plusieurs circuits LCR (14) est formé en connectant la résistance (11), la bobine (12) et le condensateur (13) en parallèle.

EP 3 496 223 B1

[Fig. 1]

7

[Fig. 2]

[Fig. 3]

[Fig. 4]

20

21

22

26

24

26

(A)

ECU

26

20

21

26

22

24

26

(B)

ECU

$I_{11}$

26

26

**EP 3 496 223 B1**

**REFERENCES CITED IN THE DESCRIPTION**

**Patent documents cited in the description**

- US 6016084 A

- JP 2015182711 A